# EUROPEAN PATENT SPECIFICATION

(11) **EP 2 821 536 B1**
(45) Date of publication and mention of the grant of the patent: **22.02.2017**
(21) Application number: 13174630.7
(22) Date of filing: 02.07.2013
(51) Int. Cl.: D06M 15/248, D04H 1/4218, D04H 13/00

(54) **COATED GLASS FIBRE MESH FABRIC WITH REDUCED GROSS HEAT OF COMBUSTION**
ÜBERZOGENES GLASFASERGEWEBE MIT REDUZIERTER BRUTTOVERBRENNUNGSWÄRME
TISSU MAILLÉ DE FIBRE DE VERRE REVÊTUE AVEC RÉDUCTION DE LA CHALEUR BRUTE DE COMBUSTION

(43) Date of publication of application: 07.01.2015
(73) Proprietor: Saint-Gobain Adfors, 73000 Chambéry (FR)
(72) Inventor: Mikulecký, Bohuslav, 562 06 Ústí nad Orlici (CZ); Helemík, Petr, 568 02 Svitavy (CZ); Kulhavý, Luká, 539 45 Nové Hrady (CZ)
(74) Representative: Saint-Gobain Recherche

(56) References cited:
- FR-A1- 2 967 997
- GB-A- 1 454 503
- US-A1- 2011 143 616
- US-B1- 6 368 991
- "Glass fibre mesh fabrics" Catalogue by Adfors Saint Gobain Construction products Europe

## Description

The present invention is drawn to a glass fiber mesh fabric for use as reinforcement in External Thermal Insulation Complex Systems. The glass fiber mesh fabric is coated with an organic polymer coating based on PVDC.

Glass fiber mesh fabrics are currently used in External Thermal Insulation Complex Systems (ETICS) to reinforce the render coating and facilitate application thereof to the underlying thermal insulation product (foam, glass wool, etc.). Such glass fiber mesh fabrics are generally coated with rubber coatings, typically SBR rubber, to provide the fabric with mechanical strength and to protect the glass fibers against the alkalinity of the render composition.

Most of the member countries of the European Union have adopted the harmonized Euroclass system of reaction-to-fire performance of building products. The background of the harmonization process lies on the Commission Decision 94/611/EC implementing Article 20 of Directive 89/106/EEC on construction products in the field of fire safety. The Euroclass decision includes a classification system for building products based on their reaction-to-fire performance. It additionally defines the test methods according to which construction products shall be categorized. To be classified in class A2 (Products of natural stone, concrete, bricks, ceramic, glass, steel and other metallic products containing small amounts of organic compounds) of the Euroclass fire rating system a glass fiber mesh fabric must have a gross heat of combustion (PCS, French acronym for *Pouvoir Calorifique Supérieur*), measured according to EN ISO 1716:2010, of at most 3 MJ/kg.

Commonly known SBR-coated glass fiber mesh fabrics with a loss on ignition (LOI) of about 20 % have a PCS of about 7 - 8 MJ/kg and consequently do not comply with the above-mentioned European regulations.

Reducing the LOI of SBR-coated glass fiber meshes to decrease their PCS is not a satisfactory solution because it results in very poor mechanical resistance of the end products.

The idea underlying the present invention was to replace the prior art SBR-based coatings by coatings having lower PCS values.

PVDC was one of the most promising candidate for such a replacement. PVDC and copolymers thereof are a group of thermoplastic polymers commonly used in the packing industries. They have excellent gas and water tightness, very good mechanical performances, satisfactory fire resistance and low combustion heat. Replacing SBR with equivalent amounts of PVDC however leads to end-products having satisfactory PCS values but which are too stiff to be rolled.

Decreasing the LOI of PVDC-coated glass fiber meshes to reduce stiffness and cost was also unsatisfactory because the mechanical properties of the resulting fabrics were low.

After extensive research the Applicant found that it was possible to improve the mechanical performances of PVDC-coated glass fiber mesh fabrics by mixing the PVDC latex with low amounts of heat-curable formaldehyde-based resins.

Adding formaldehyde-based resins to the PVDC binder desirably increases the mechanical strength of the resulting coating thereby allowing reduction of the overall LOI and in particular reduction of the amount of PVDC required, which is very interesting from an economical point of view because PVDC is a rather expensive polymer.

The present invention is therefore drawn, in a first aspect, to a glass fiber mesh fabric coated with an organic polymer coating, said polymer coating comprising
(i) from 60 wt% to 99.9 wt% of poly(vinylidene chloride) (PVDC) or a copolymer thereof;
(ii) from 0.1 wt% to 40 wt% of a formaldehyde-based resin selected from melamine-formaldehyde resins, phenol-formaldehyde resins, urea-formaldehyde resins or a combination thereof.

The above percentages should be understood to be based on the total amount of organic polymer coating. The sum of these percentages does not necessarily amount to 100 % because, as will be explained hereafter, the organic polymer coating may further comprise a plastifying polymer and other optional adjuvants commonly used in the field of polymer coatings for construction products.

The uncoated glass fiber mesh fabric of the present invention may be any open glass fiber fabric currently used for the production of SBR-coated glass fiber mesh fabrics.

It may be a woven or knitted fabric. Its specific weight is preferably comprised between 30 and 500 g/m², more preferably between 50 and 300 g/m², and most preferably between 100 and 150 g/m².

The size of the mesh openings is preferably comprised between 1 mm² and 15 cm².

The warp and weft tensile strength of the mesh fabric measured on stripes (5 cm x 30 cm) is comprised between 400 N and 10 000 N.

The organic polymer coating may be applied to the uncoated glass fabric without any pretreatment. The total amount of organic polymer coating may be expressed as the loss-on-ignition (LOI), measured according to EN ISO 1887 of the final polymer-coated fabric. The organic polymer coating generally comprises between 6 wt% and 20 wt%, preferably between 7 wt% and 15 wt%, and more preferably between 8 and 12 wt% of the final coated glass fiber mesh.

Polymers of vinylidene chloride are the main component of the organic polymer coating. This term includes homopolymers of vinylidene chloride (PVDC) and copolymers of vinylidene chloride and of at least another comonomer (PVDC-based copolymers). PVDC-based copolymers are preferred. Comonomers are preferably selected from the group consisting of methyl acrylate, ethyl acrylate, butyl acrylate, methyl methacrylate, acrylonitrile, methacrylonitrile, unsaturated carboxylic acids, vinyl chloride. PVDC-based copolymers generally comprise from 75 to 98 wt%, preferably 80 to 95 wt% of vinylidene chloride monomer units and from 2 to 25 wt%, preferably from 5 to 20 wt% of comonomer units.

As explained above the organic polymer coating must contain, in addition to the PVDC or PVDC-based copolymer, a thermoset formaldehyde-based resin, preferably selected from melamine-formaldehyde resin, phenol-formaldehyde resin, urea-formaldehyde resin and combinations thereof. This resin is added to the coating composition in the form of a non-cured aqueous solution of an oligomeric resin prepared by prepolymerisation of formaldehyde and phenol, melamine or urea. It is completely polymerized and cured *in situ* by heating.

The organic polymer coating preferably comprises from 0.1 to 10 wt%, more preferably from 0.5 to 8 wt%, and most preferably from 1 to 4 wt% of melamine-formaldehyde resin, phenol-formaldehyde resin, urea-formaldehyde resin or a combination thereof.

The Applicant has observed that replacing styrene-butadiene rubber by a PVDC based polymer coating, resulted in a stiffer final product. To reduce the stiffness of the organic polymer coating and of the final coated mesh fabric, the Applicant added a plastifying polymer to the coating composition. This plastifying polymer may be any organic thermoplastic polymer that is compatible or miscible with the PVDC or PVDC-based copolymer and has a glass transition temperature (Tg) lower than 40°C, preferably a polymer having a Tg comprised between -60 °C and +20 °C.

Preferred plastifying polymers are selected from the group consisting of polyacrylates and polymethacrylates, styrene-butadiene copolymers, styrene-acrylate copolymers, poly(vinyl acetate) and poly(ethylene vinylacetate) copolymers.

These plastifying polymers are added to the coating composition as a powder or aqueous polymer dispersion.

The organic polymer coating of the glass fiber mesh fabric preferably contains from 0.1 to 40 wt%, more preferably from 5 to 25 wt% and most preferably from 10 to 20 wt% of said plastifying polymer having a Tg lower than 40 °C.

The present invention also provides a method for producing a coated glass fiber mesh fabric according to the present invention. This method comprises
(a) impregnating a woven or knitted uncoated glass fiber mesh fabric with an aqueous coating composition containing, with respect to its total solids content,
   (i) from 60 wt% to 99.9 wt% of poly(vinylidene chloride) (PVDC) or a copolymer thereof; and
   (ii) from 0.1 wt% to 40 wt% of at least a second polymer selected from the group consisting of melamine-formaldehyde resins, phenol-formaldehyde resins, urea formaldehyde resins or a combination thereof,
(b) drying the impregnated glass fiber mesh fabric by heating at a temperature comprised between about 100 °C and 280 °C for a period of time comprised between about 30 seconds to 20 minutes.

Impregnation is preferably carried out by immersing the mesh fabric to be coated in an aqueous coating bath comprising the components of the organic coating and then pressing the impregnated fabric between to press rolls to eliminate excess coating composition. Impregnation could also be done for example by roll coating or screen coating.

The PVDC or PVDC-based copolymer is preferably used as an aqueous latex composition having total solids content comprised between 30 and 70 wt%, preferably between 40 and 60 wt%.

The other polymer components, i.e. formaldehyde-based resins and plastifying polymer are preferably added in aqueous forms (solutions or aqueous dispersions).

The coating bath may further comprise any useful adjuvant currently used in the field of polymer coatings such as thickeners, buffers, dyes, organic or mineral pigments, UV-absorbers, brighteners, rheology modifiers, alkali such as ammonia, fillers such as PVC or carbonates.

The resulting coated glass fiber mesh fabrics obtained by the above-described method have a gross heat of combustion (PCS) of less than 3.5 MJ/kg, preferably less than 3.0 MJ/kg (according to EN ISO 1716:2010).

### Examples

The fiber mesh fabric for all examples was a standard glass fiber mesh fabric (Saint-Gobain Adfors) having a specific weight of 130 g/m².

This fabric was impregnated by immersion in an aqueous coating bath and then pressed between two rolls before being cured.

The coating baths had the following composition (% of solids)
A : 96.6% of an aqueous dispersion of PVDC (Diofan A063, SolVin)
   3 % of a melamine-formaldehyde resin
   0.1 % of aqueous ammonia
B : 76.9% of an aqueous dispersion of PVDC (Diofan A063, SolVin)
   3 % of a melamine-formaldehyde resin
   20 % of an acrylic binder (Printofix Binder CFN) with Tg of 20°.
   0.1 % of aqueous ammonia

The glass fiber mesh fabric coated with 7 % (LOI) of composition A had a PCS of 1.4 MJ/kg.

The glass fiber mesh fabric coated with 7 % (LOI) of composition B had a PCS of 2.9 MJ/kg.

## Claims

1. A glass fiber mesh fabric coated with an organic polymer coating, said polymer coating comprising
(i) from 60 wt% to 99.9 wt% of poly(vinylidene chloride) (PVDC) or a copolymer thereof;
(ii) from 0.1 wt% to 40 wt% of a formaldehyde-based resin selected from melamine-formaldehyde resins, phenol-formaldehyde resins, urea-formaldehyde resins or a combination thereof.

2. The coated glass fiber mesh fabric according to claim 1, wherein the organic polymer coating comprises between 6 wt% and 20 wt%, preferably between 7 wt% and 15 wt%, and more preferably between 8 and 12 wt%, measured as the loss on ignition (LOI), of the total coated glass fiber mesh.

3. The coated glass fiber mesh fabric according to claim 1 or 2, wherein the organic polymer coating comprises from 0.1 to 10 wt%, preferably from 0.5 to 8 wt%, more preferably from 1 to 4 wt%, of melamine-formaldehyde resin or phenol-formaldehyde resin or urea-formaldehyde resin or a combination thereof.

4. The coated glass fiber mesh fabric according to any of the preceding claims, wherein the PVDC-based copolymers comprise from 75 to 98 wt%, preferably 80 to 95 wt% of vinylidene chloride monomer units and from 2 to 25 wt%, preferably from 5 to 20 wt% of at least one comonomer selected from methyl acrylate, ethyl acrylate, butyl acrylate, methyl methacrylate, acrylonitrile, methacrylonitrile, unsaturated carboxylic acids, vinyl chloride.

5. The coated glass fiber mesh fabric according to any of the preceding claims, having a gross heat of combustion (PCS) of less than 3.5 MJ/kg, preferably less than 3.0 MJ/kg (according to EN ISO 1716:2010).

6. The coated glass fiber mesh fabric according to any of the preceding claims, wherein the coating further comprises from 0.1 to 40 wt%, preferably from 5 to 30 wt% and more preferably from 10 to 20 wt% of an organic polymer having a Tg lower than 40 °C, preferably comprised between -60 °C and 20 °C.

7. The coated glass fiber mesh fabric according to claim 6, wherein the organic polymer having a Tg lower than 40 °C is selected from the group consisting of polyacrylates and polymethacrylates, styrene-butadiene copolymers, styrene-acrylate copolymers, poly(vinyl acetate) and poly(ethylene vinylacetate) copolymers.

8. A method for producing a coated glass fiber mesh according to any of the preceding claims, comprising
(a) impregnating a woven or knitted uncoated glass fiber mesh fabric with an aqueous coating composition containing, with respect to its total solids content,
(i) from 60 wt% to 99.9 wt% of poly(vinylidene chloride) (PVDC) or a copolymer thereof;
(ii) from 0.1 wt% to 40 wt% of at least a second polymer selected from the group consisting of melamine-formaldehyde resins, phenol-formaldehyde resins, urea formaldehyde resins or a combination thereof,
(b) drying the impregnated glass fiber mesh fabric by heating at a temperature comprised between about 100 °C and 280 °C for a period of time comprised between about 5 seconds to 5 minutes.

9. The method according to claim 8, wherein the PVDC or PVDC copolymer is an aqueous latex composition having a solids content comprised between 30 and 70 wt%, preferably between 40 and 60 wt%.

10. The method according to claim 8 or 9, wherein the melamine-formaldehyde resin, phenol-formaldehyde resin or urea-formaldehyde resin is added as a non-cured aqueous solution of an oligomeric resin.

11. The method according to any of claims 8 to 10, wherein the uncoated glass fiber mesh fabric has a weight of 30 to 500 g/m², preferably 50 to 300 g/m², and more preferably 100 to 150 g/m².

## Patentansprüche

1. Glasfasergewebe, welches mit einer organischen Polymerbeschichtung überzogen ist, wobei die Polymerbeschichtung umfasst
(i) 60 Gew.-% bis 99,9 Gew.-% Poly(vinylidenchlorid) (PVDC) oder ein Copolymer davon;
(ii) 0,1 Gew.-% bis 40 Gew.-% eines auf Formaldehyd basierenden Harzes, ausgewählt aus Melamin-Formaldehydharzen, Phenol-Formaldehydharzen, Urea-Formaldehydharzen oder einer Kombination daraus.

2. Beschichtetes Glasfasergewebe nach Anspruch 1, wobei die organische Polymerbeschichtung zwischen 6 Gew.-% und 20 Gew.-%, vorzugsweise zwischen 7 Gew.-% und 15 Gew.-% und noch bevorzugter zwischen 8 und 12 Gew.-%, gemessen als Glühverlust (LOI), des gesamten Glasfasergewebes ausmacht.

3. Beschichtetes Glasfasergewebe nach Anspruch 1 oder 2, wobei die organische Polymerbeschichtung 0,1 bis 10 Gew.-%, bevorzugt 0,5 bis 8 Gew.-%, noch bevorzugter 1 bis 4 Gew.-% Melaminformaldehydharz oder Phenol-Formaldehydharz oder Urea-Formaldehydharz oder eine Kombination davon umfasst.

4. Beschichtetes Glasfasergewebe nach einem der vorhergehenden Ansprüche, wobei die auf PVCD basierenden Copolymere 75 bis 98 Gew.-%, vorzugsweise 80 bis 95 Gew.-% Vinylidenchloridmonomereinheiten und 2 bis 25 Gew.-%, vorzugsweise 5 bis 20 Gew.-% von zumindest einem Comonomer ausgewählt aus Methylacrylat, Ethylacrylat, Butylacrylat, Methylmethacrylat, Acrylonitril, Methacrylonitril, ungesättigte Carboxylsäuren, Vinylchlorid umfasst.

5. Beschichtetes Glasfasergewebe nach einem der vorhergehenden Ansprüche, welches eine Bruttoverbrennungswärme (PCS) von weniger als 3,5 MJ/kg, vorzugsweise weniger als 3,0 MJ/kg (gemäß EN ISO 1716:2010) hat.

6. Beschichtetes Glasfasergewebe nach einem der vorhergehenden Ansprüche, wobei die Beschichtung des Weiteren 0,1 bis 40 Gew.-%, vorzugsweise 5 bis 30 Gew.-% und noch bevorzugter 10 bis 20 Gew.-% eines organischen Polymers umfasst, welches eine T_{g} von weniger als 40°C hat, vorzugsweise eine T_{g} zwischen -60°C und 20°C.

7. Beschichtetes Glasfasergewebe nach Anspruch 6, wobei das organische Polymer mit einer Tg von weniger als 40°C ausgewählt ist aus der Gruppe bestehend aus Polyacrylaten und Polymethacrylaten, Styrol-Butadiencopolymeren, Styrol-Acrylat-Copolymeren, Poly(vinylacetat) und Poly(ethylen vinylacetat)-Copolymeren.

8. Verfahren zur Herstellung eines beschichteten Glasfasergewebes nach einem der vorhergehenden Ansprüche, umfassend
(a) Imprägnieren eines gewebten oder gestrickten unbeschichteten Glasfasergewebes mit einer wässrigen Beschichtungszusammensetzung umfassend, bezogen auf ihren Gesamtfeststoffgehalt,
(i) 60 Gew.-% bis 99,9 Gew.-% Poly(vinylidenchlorid) (PVDC) oder ein Copolymer davon;
(ii) 0,1 Gew.-% bis 40 Gew.-% von zumindest einem zweiten Polymer, ausgewählt aus der Gruppe bestehend aus Melamin-Formaldehydharzen, Phenol-Formaldehydharzen, Urea-Formaldehydharzen oder einer Kombination davon,
(b) Trocknen des imprägnierten Glasfasergewebes durch Erhitzen auf eine Temperatur zwischen 100 °C und 280 °C über eine Zeitdauer von 5 Sekunden bis 5 Minuten.

9. Verfahren nach Anspruch 8, wobei das PVDC oder das PVDC-Copolymer eine wässrige Latexzusammensetzung ist, die einen Feststoffgehalt zwischen 30 und 70 Gew.-%, vorzugsweise zwischen 40 und 60 Gew.-% hat.

10. Verfahren nach Anspruch 8 oder 9, wobei das Melamin-Formaldehydharz, Phenol-Formaldehydharz oder Urea-Formaldehydharz als nicht ausgehärtete wässrige Lösung eines oligomerischen Harzes hinzugefügt wird.

11. Verfahren nach einem der Ansprüche 8 bis 10, wobei das unbeschichtete Glasfasergewebe ein Gewicht von 30 bis 500 g/m², vorzugsweise 50 bis 300 g/m² und noch bevorzugter 100 bis 150 g/m² hat.

## Revendications

1. Textile de type grille en fibres de verre enrobé d'un revêtement à base de polymère organique, ledit revêtement polymérique comprenant :
(i) De 60 % en poids à 99,9 % en poids de poly(chlorure de vinylidène) (PVDC) ou d'un copolymère de celui-ci,
(ii) De 0,1 % en poids à 40 % en poids d'une résine à base de formaldéhyde choisie parmi les résines mélamine-formaldéhyde, les résines phénol-formaldéhyde, les résines urée-formaldéhyde ou une combinaison de celles-ci.

2. Textile de type grille en fibres de verre enrobé selon la revendication 1, dans lequel le revêtement à base de polymère organique représente entre 6 % en poids et 20 % en poids, de préférence entre 7 % en poids et 15 % en poids, et plus préférentiellement entre 8 et 12 % en poids, déterminé comme perte au feu (LOI), du poids total de la grille de fibres de verre enrobée.

3. Textile de type grille en fibres de verre enrobé selon la revendication 1 ou 2, dans lequel le revêtement à base de polymère organique comprend de 0,1 à 10 % en poids, de préférence de 0,5 à 8 % en poids, plus préférentiellement de 1 à 4 % en poids de résine mélamine-formaldéhyde ou de résine phénol-formaldéhyde ou de résine urée-formaldéhyde ou d'une combinaison de celles-ci.

4. Textile de type grille en fibres de verre enrobé selon l'une quelconque des revendications précédentes, dans lequel les copolymères à base de PVDC comprennent de 75 à 98 % en poids, de préférence de 80 à 95 % en poids de motifs monomères chlorure de vinylidène, et de 2 à 25 % en poids, de préférence de 5 à 20 % en poids d'au moins un comonomère choisi parmi l'acrylate de méthyle, l'acrylate d'éthyle, l'acrylate de butyle, le méthacrylate de méthyle, l'acrylonitrile, le méthacrylonitrile, les acides carboxyliques insaturés, le chlorure de vinyle.

5. Textile de type grille en fibres de verre enrobé selon l'une quelconque des revendications précédentes, présentant un pouvoir calorifique supérieur (PCS) inférieur ou égal à 3,5 MJ/kg, de préférence inférieur à 3,0 MJ/kg (selon EN ISO 1716:2010).

6. Textile de type grille en fibres de verre enrobé selon l'une quelconque des revendications précédentes, dans lequel le revêtement comprend en outre de 0,1 à 40 % en poids, de préférence de 5 à 30 % en poids et plus préférentiellement de 10 à 20 % en poids d'un polymère organique ayant une Tg inférieure à 40 °C, de préférence comprise entre -60 °C et 20 °C.

7. Textile de type grille en fibres de verre enrobé selon la revendication 6, dans lequel le polymère organique ayant une Tg inférieure à 40 °C est choisi dans le groupe constitué de polyacrylates et polyméthacrylates, copolymères styrène-butadiène, copolymères styrène-acrylate, poly(acétate de vinyle) et copolymères poly(acétate de vinyle-b-éthylène).

8. Procédé pour produire une grille en fibres de verre enrobée selon l'une des revendications précédentes, comprenant
(a) l'imprégnation d'un textile de type grille de fibres de verre non enrobé, tissé ou tricoté, avec une composition de revêtement aqueuse contenant, rapporté à sa teneur totale en matières solides,
(i) de 60 % en poids à 99,9 % en poids de poly(chlorure de vinylidène) (PVDC) ou d'un copolymère de celui-ci,
(ii) de 0,1 % en poids à 40 % en poids d'au moins un second polymère choisi dans le groupe constitué de résines mélamine-formaldéhyde, résines phénol-formaldéhyde, résines urée-formaldéhyde ou une combinaison de celles-ci,
(b) le séchage du textile de type grille de fibres de verre imprégné par chauffage à une température comprise entre environ 100 °C et 280 °C, pour une durée comprise entre environ 5 secondes et 5 minutes.

9. Procédé selon la revendication 8, dans lequel le PVDC ou le copolymère à base de PVDC est une composition aqueuse de latex ayant une teneur en matières solides comprise entre 30 et 70 % en poids, de préférence entre 40 et 60 % en poids.

10. Procédé selon la revendication 8 ou 9, dans lequel la résine mélamine-formaldéhyde, la résine phénol-formaldéhyde ou la résine urée-formaldéhyde est ajoutée sous forme d'une solution aqueuse non durcie de résine oligomère.

11. Procédé selon la revendication 8 à 10, dans lequel le textile de type grille de fibres de verre non-enrobée a poids compris entre 30 et 500 g/m², de préférence entre 50 et 300 g/m², et plus préférentiellement entre 100 et 150 g/m².
